(19) Europäisches Patentamt

European Patent Office

Office européen des brevets

(11) **EP 1 152 544 A1**

(12) **EUROPEAN PATENT APPLICATION**

(43) Date of publication:
**07.11.2001 Bulletin 2001/45**

(51) Int Cl.7: **H04B 1/707**

(21) Application number: **00310288.6**

(22) Date of filing: **20.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.05.2000 US 566282**

(71) Applicant: **LUCENT TECHNOLOGIES INC.**
**Murray Hill, New Jersey 07974-0636 (US)**

(72) Inventor: **Nguyen, Minhson Duc**
**Hackensack, New Jersey 07601 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **A time efficient real time correlator for CDMA systems**

(57)     The present invention provides a time-efficient real-time correlator for use in a receiver of a wireless CDMA communications system. The correlator correlates a signal received by the receiver with a pseudo-random number (PN) code and produces correlation results. The correlation results are utilized by other logic in the receiver to determine the time delay of the received signal, which is then utilized to decode the received signal. The correlator requires no memory for storing samples of the received signal because only the current sample of the received signal is correlated with the PN code sequences. Using a time delay element such as a RAM shift register or dual-port RAM to act as a delay buffer, the PN sequence is temporal shifted (delayed) with respect to the received data by an interval of time that is related to the number of correlators in the system multiplied by the processing power of each of the correlators. With this invention, the cell site coverage area of a CDMA system is substantially increased with minimal or no additional cost in hardware.

FIG. 4

**EP 1 152 544 A1**

**Description**

## RELATED APPLICATIONS

Related subject matter is disclosed in the following applications assigned to the same assignee hereof: U. S. Patent Application entitled "A Time-Efficient Real-Time Correlator", Serial No. 09/493057, filed January 27, 2000, and U. S Patent Application entitled "A Real-Time Correlator That Utilizes Shift Registers And Dual-Port Memory", Serial No.09/491762, filed January 27, 2000.

## TECHNICAL FIELD OF THE INVENTION

The present invention relates to correlators utilized in receivers of base stations and mobile units of wireless systems. More particularly, the present invention relates to a real-time correlator that utilizes shift registers and dual-port memory in combination with a time delay element.

## BACKGROUND OF THE INVENTION

Wireless systems utilize a communication protocol known as Code Division Multiple Access (CDMA). In CDMA, a communication channel uses a common frequency band. In the reverse-link *(i.e.,* from the mobile to the base station), different mobile units are identified by using different psuedo-random number (PN) codes. In the forward-link *(i.e.,* from the base station to the mobile unit), all base stations use the same PN codes but are identified by different offsets. Time data is transmitted between a base station and a mobile unit and includes a PN code. The PN codes are fixed and are known to both the base station and the mobile units. However, there is a time-offset between them due to round trip delay of the transmission signal. If the time-offset is not correctly estimated, the received signal looks like noise. The receivers of the base station and of the mobile units comprise correlators that correlate the incoming PN code with stored PN codes to determine the offset. The offset is utilized to synchronize the received signal to allow the received data to be decoded during the forward-link and for timing recovery.

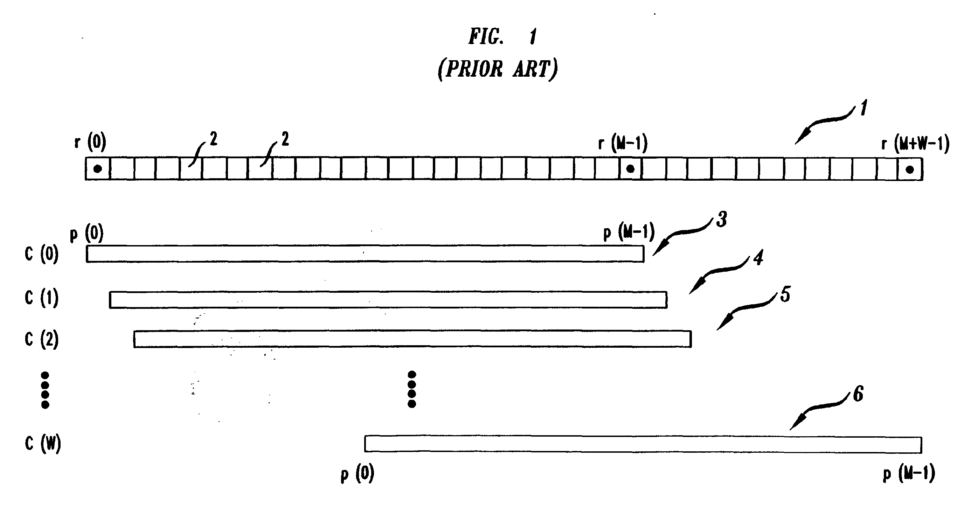

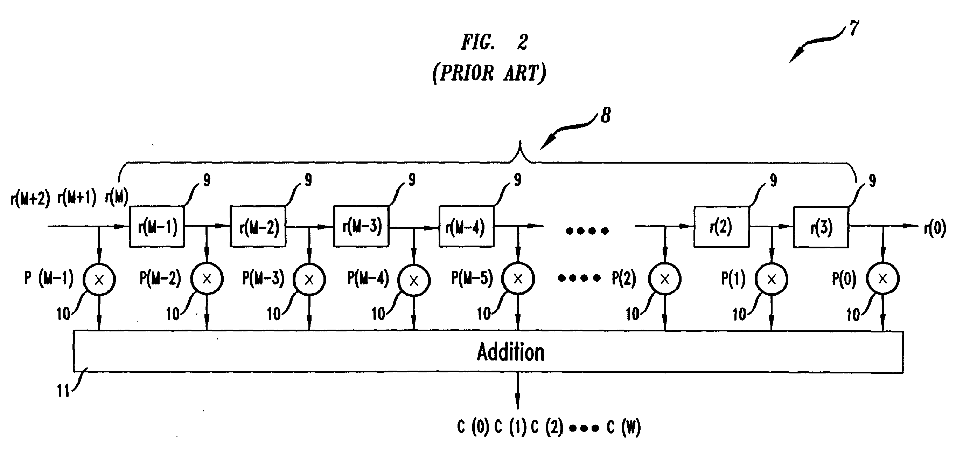

The correlators that are currently utilized in the receivers of the base stations and mobile units for correlating the PN codes either do not perform the correlation in real-time or do not perform the correlation in real-time in an efficient manner. Figs. 1 and 2 correspond to known correlators. Prior to describing the manner in the correlation process is executed, the correlation process will be mathematically described.

When a discrete-time sequence exists that corresponds to a time-delayed version of a known sequence plus noise, the time delay can be determined by the correlator. The functionality of the correlator is defined as follows: Letting the known discrete-time sequence be p(i), then the received signal $\underline{r}$(i), which corresponds to a version of the sequence p(i) delayed by N-time units plus noise n(i), can be stated as:

$$\underline{r}(i) = \underline{p}(i\text{-}N) + n(i), \qquad\qquad \text{(Equation 1)}$$

where i is a discrete time index defined as i∈{...,-3,-2,-1,0,1,2,3,...}.

The correlator calculates the correlation result, C(k), as follows:

$$C(k) = \sum_{i=0}^{M-1} r(i+k)p(i) \ , \mathrm{k} \in \{0,1,2,...,\mathrm{W}\}, \qquad\qquad \text{(Equation 2)}$$

where M is the coherent integration length and W is the maximum time delay, or search window.

If $\underline{C}$(k) is the largest correlation result of all {C(0), C(1), C(2), ... , $\underline{C}$(K), ... C(W)}, then k corresponds to the estimated time delay, or time shift. This can be seen from Equation 3 below, which is derived from Equations 1 and 2.

$$C(k) = \sum_{i=0}^{M-1} p(i+k-N)p(i) + \sum_{i=0}^{M-1} n(i+k)p(i) \qquad\qquad \text{(Equation 3)}$$

The first term is the signal component and the second term is the noise component. The signal component has the largest value when k is equal to N. As the value of the coherent integration length M increases, the time delay estimation becomes more precise.

With respect to the correlator shown in Fig. 1, the received signal is stored in memory before being processed. The received signal is represented by the horizontal row 1 comprised of blocks 2. The received signal r(i) is correlated with a PN sequence generated by a PN code generator (not shown). Each of the blocks 2 corresponds to a sample of the received signal. Each sample is commonly referred to as a "chip". Blocks 3, 4, 5 and 6 correspond to the generated PN sequence that is correlated with r(i) to obtain the correlation results $\underline{C}$(0) through C(W). Blocks 3, 4, 5 and 6 are shifted to represent the cross-correlation process over the correlation window W. The best correlation result corresponds to a match between the received PN sequence and the generated PN sequence. The time shift associated with the match corresponds to the time delay of the received signal $\underline{r}$(i) *(i.e.,* the number of chips that the received signal is offset with respect to the generated PN sequence).

Assuming each $\underline{r}$(i) sample has B bits and each p(i) sample has H bits, then (M+W)B + MH bits of memory are needed to store the received signal and the PN sequence. In the case of the reverse-link, the length of the PN code is considered to be almost infinite (*e.g.,* 2 to the power of 42). Therefore, an entire PN code can not be correlated with the received signal $\underline{r}$(i). Rather, the PN code and the received signal $\underline{r}$(i) are cross-correlated over M samples, where M is reasonably large for reliable estimation. For the same reason, the PN codes are generated instead of being memorized. Algorithms executed by the mobile units and by the base stations inform the correlators as to what the PN sequence should be at any given time of day. The correlators then attempt to find a matching PN sequence by performing the M-length cross-correlation process for each possible offset, where W possible offsets exist.

Furthermore, the correlation process is not a real-time process because the correlation calculations do not begin until after the arrival of the last sample, $\underline{r}$(M+W-1), of the received signal $\underline{r}$(i). In order for the correlation process to be performed in real-time, the correlation results $\underline{C}$(0) through $\underline{C}$(W) must be available by the time the last sample of the received signal, $\underline{r}$(M+W-1), has been received. Also, the multiplication and addition operations associated with each correlation of the generated PN code and the received signal must be performed during a single sample period.

The correlator shown in Fig. 2 uses a finite impulse response (FIR) filter 7 to perform the correlation process in real-time. The filter 7 is an M-th order FIR filter having the generated PN code, $\underline{p}$(i), as its coefficients. A period of time equal to M chips is required for the received signal $\underline{r}$(1) through $\underline{r}$(M-1) to be shifted into the register 8. The register 8 comprises M storage elements 9. Assuming each sample of the received signal comprises B bits, the filter 7 requires MxB bits of memory for storing the received signal and MxH bits of memory for storing the generated PN sequence $\underline{p}$(0) through $\underline{p}$(M-1). Therefore, the amount of memory needed for the correlator shown in Fig. 2 is less than the amount needed for the correlation scheme represented by Fig. 1. Essentially, the amount of memory needed for the correlator of Fig. 2 is WxB bits less than the amount of memory required for the correlation scheme represented by Fig. 1. However, W normally is small in comparison to M. Therefore, the reduction in the amount of memory needed for implementation of the correlator shown in Fig. 2 is not very significant.

Once the last sample $\underline{r}$(M-1) has arrived, each sample is multiplied by its respective PN code sample by multipliers 10. The products are then summed by accumulator 11 to produce the correlation results $\underline{C}$(0) through $\underline{C}$(W). These operations are mathematically defined by Equation (2). M multiplications and M- additions are performed per input sample for the process to meet the real-time requirements. Therefore, the processor that performs the multiplication and addition operations must be fast enough to perform M multiplications and M-1 additions per input sample period, which can be difficult to achieve. For each new sample of the received signal, all of the multiplications and additions must be performed during the sample period. This is a large amount of processing to be performed in a very short time interval.

Also, although the correlator shown in Fig. 2 performs the correlation process in real-time, it is not time-efficient. The processor is only active for W chips, or sample times, out of the total number of sample times, M+W-1. For example, if the coherent integration length (M) is 1000 and the search window (W) is 100, the processor is only active about 9 % of the time (*i.e.*, 100/1,099). Therefore, the correlator of Fig. 2 does not utilize its resources in a time-efficient manner because it is only active a small percentage of the time, and when it is active, it must perform all of the calculations within a very small time interval.

Additionally, to perform the correlation process in real-time, intensive utilization of hardware resources is normally required. The intensive use of hardware resources is due to the number of parallel correlators needed in the real-time implementation process. The number of the required correlators is dependent on the searcher window size divided by the correlator processor power. The searcher window size is determined by the system chip rate and by the round trip delay distance. The processor power is defined as the number of correlations each correlator can perform on the input data per input data rate. The value of the processor power is affected by other system parameters such as the system clock rate, the input data rate, the chip rate, and the like. In a typical system, the large number of correlators required may present a hardware resource availability problem whether Application Specific Integrated Circuit (ASIC) or Field Programmable Gate Array (FPGA) technology is used. For example, if under certain hardware resource constraints, only half of the required correlators can be implemented, then this constraint will effectively reduce the cell radius by one-half.

Accordingly, a need exists for a method that is capable of enhancing the performance of the correlation process in real-time, that has relatively small memory requirements relative to the aforementioned correlators and can operate with a reduced number of parallel correlators to effectively enhance the cell size.

## SUMMARY OF THE INVENTION

The present invention provides a solution to increase the size of the search window of a CDMA communication system that is implemented via the Time-Efficient Real Time Correlating Technique with little or no additional hardware. This invention makes usage of a memory storage element to cause a temporal shift (time delay) between the generated complex PN sequence and the complex PN sequence imbedded in the received signal. First, by correlating first the non-delayed generated complex PN sequence with the incoming signal, and second, by correlating the delayed version of the generated complex PN sequence with the incoming signal. The combined results form a completed set of correlating results of the larger search window.

The correlator requires no memory for storing samples of the received signal because only the current sample of the received signal is correlated with the PN code sequences. A first shift register having W/N storage elements is filled with the non-buffered (not delayed) real samples (PN I) of the PN code sequence, where W/N is a positive integer corresponding to the length of the correlation window. A second shift register having W/N storage elements is filled with the non-buffered imaginary samples (PN Q) of the PN code sequence. During a given sample period, a plurality of real and imaginary PN code samples are correlated with the current sample of the received signal and, at the end of the sample period, the shift registers are shifted by one chip and the shifted PN code sequence is correlated with the current sample of the received signal. As the correlation results are produced, they are accumulated and stored in synchronous dual-port memory devices. As new correlation results are produced, they are added to correlation results previously stored in the dual-port memory devices. The sum is then stored in the dual-port memory devices. This process is repeated until all the desired segments of the search window have been completed. After a predetermined number of sample periods, the correlation results stored in the dual-port memory device are mature. These results, which are the first segment of W/N length of the search window N, are sent to another storage device to make room for the result of the correlation between the received signals and the buffered (delayed) PN sequences of the PN code sequence. Subsequently, buffered (delayed) real samples of the PN code sequence fill the first shift register and buffered imaginary samples of the PN code sequence fill the second shift register. During a sample period, a plurality of real and imaginary samples of the PN code sequence is correlated with the current sample of the received signal and, at the end of the sample period, the shift registers are shifted by one chip and the shifted PN code sequence is correlated with the current sample of the received signal. As the correlation results are produced, they are accumulated in synchronous dual-port memory devices. As new correlation results are produced, they are added to correlation results previously stored in the dual-port memory devices. The sum is then stored in the dual-port memory devices. After a predetermined number of sample periods, the correlation results stored in the dual-port memory device are mature. The second set of results are sent to the storage device that contains the first set of correlation results. It is appended to the end of the first set of results to form correlation results of a larger segment of the length 2 x (W/N) of the search window, W. Subsequently, buffered real and imaginary samples of a different delay of the PN code sequences fill the first and second shift register respectively and a correlation calculation is performed. The results are sent and appended to the end of the previous set of results. This is repeated until N sets of results are computed and the final result is the appended results of N segments to form a complete search window of length W. The number of correlators required in the Time-Efficient Real Time Correlating Technique is reduced by a factor of 1/N which yielded a substantial saving in hardware.

## BRIEF DESCRIPTION OF THE DRAWINGS

Fig. 1 represents a known correlation process, which is not performed in real-time;
Fig. 2 is a block diagram of a known real-time correlator;
Fig. 3 is a conceptual block diagram of the time-efficient real-time correlator of the present invention, which illustrates each imaginary multiplication and addition operation associated with a given PN sample being performed by a separate processor;
Fig. 4 is a conceptual block diagram of the time-efficient real-time correlator of the present invention, which illustrates multiple imaginary multiplication and addition operations associated with multiple PN samples being performed by each processor;

Figs. 5, 6, 7 and 8 are block diagrams that illustrate structure in accordance with the principles of the invention; and Fig. 9 is a block diagram of the invention when the number of correlators that can be implemented is only 1/N of the number of correlators needed.

## DETAILED DESCRIPTION OF THE INVENTION

The PN code samples $\underline{p}$(i) and the samples $\underline{r}$(i) of the received signal discussed above with reference to Equations 1 through 3 have real and imaginary components. For ease of explanation, the real and imaginary components were not individually addressed in discussing Equations 1 through 3. However, to more fully describe the various aspects of the correlation process of the present invention, the real and imaginary components of the PN code samples and of the received signal samples will be addressed.

A PN sequence can be defined as: $\underline{p}$(i)=(pI(i), pQ(i)), where i is an integer representing a time index. The time index $\underline{i}$ is equal to a chip, which corresponds to the speed at which the PN sequence is shifted through the correlator, as described below in detail. pI(i) represents the real component of the PN sequence and pQ(i) represents the imaginary component of the imaginary sequence. For exemplary purposes, it will be assumed that the received signal $\underline{r}$(i) is at a half-chip resolution. Therefore, the received signal $\underline{r}$ is correlated at half-chip increments (*i.e.*, i and i+0.5). However, it should be noted that the present invention is not limited with respect to the resolution of the received signal $\underline{r}$. Chip resolutions of 1, 1/4, 1/8, etc. may also be utilized. Generally speaking, the lower the chip resolution, the greater the resolution of the timing delay calculations.

The non-coherent integration length, M, corresponds to the number of samples of the received signal $\underline{r}$ that will be correlated over the correlation search window, W, to produce a set of correlation results $\underline{C}$(0) through $\underline{C}$(W-1). The coherent integration results $\underline{C}$(k), $\underline{C}$(k+0.5), where k∈{0,1,2,3,...,W-1}, can be obtained as follows:

$$\underline{C}(k) \equiv \sum_{i=0}^{M-1} \underline{p}(i-k) \otimes \underline{r}(i)$$

$$\underline{C}(k+0.5) \equiv \sum_{i=0}^{M-1} \underline{p}(i-k) \otimes \underline{r}(i+0.5)$$

$$(\text{Equation } 4)$$

where $\otimes$ represents complex multiplication, $\underline{p}$(i) is the complex PN value, and $\underline{r}$(i) is the received signal.

For exemplary purposes, the correlation process is assumed to be performed at half-chip resolution. Therefore, the correlation results $\underline{C}$(k) and $\underline{C}$(k+0.5) must be obtained at 0.5 increments of the time index $\underline{i}$.

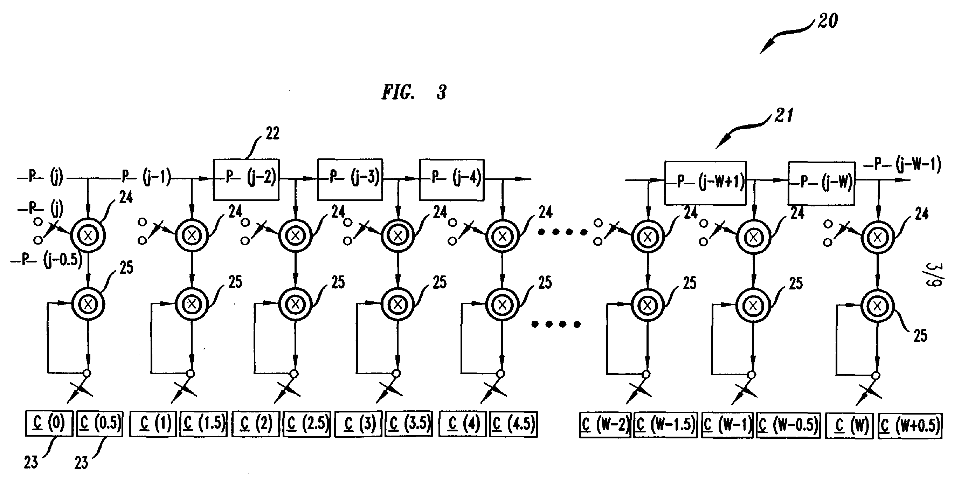

Fig. 3 illustrates a functional block diagram of the time-efficient real-time correlator 20 of the present invention. The search window W is equal to the number of PN code samples that are needed to perform the correlation process. The PN sequences are generated by a PN code generator (not shown) and are delivered to the correlator 20. Although not specifically shown in Fig. 3, a first shift register stores the real PN code samples and a second shift register (not shown) stores the imaginary PN code samples. For ease of illustration, a single shift register 21 is shown in Fig. 3 for storing the real and imaginary PN code samples. The shift register 21 has W storage elements 22 for storing the samples of the PN code sequence $\underline{p}$(j) through $\underline{p}$(j-W). However, no memory is needed for storing $\underline{r}$(i) because the correlation process is performed in real-time on the current sample of the received signal as it is presented to the correlator 20. Therefore, the total amount of memory needed is 2(W)H bits, where H represents the number of bits of each PN sample.

The correlator 20 of the present invention performs (W) multiplications and (W) additions for each received sample $\underline{r}$(i), $\underline{r}$(i+0.5). Each sample $\underline{r}$(i), $\underline{r}$(i+0.5) is multiplied by a respective real sample and by a respective imaginary sample of the PN code by a respective multiplier 24. The results of these operations are accumulated by an adder 25 in a storage element 23. 2(W) storage elements 23 are utilized for accumulating the correlation results $\underline{C}$(0) through $\underline{C}$(W). The correlation results are produced at half-chip resolution. When the next sample $\underline{r}$(i), $\underline{r}$(i+0.5) is received, the respective real and imaginary samples are multiplied by the PN sample and the results are accumulated by respective adders 25 in respective storage elements 23. The PN samples are then shifted in the direction indicated. The next sample $\underline{r}$(i), $\underline{r}$(i+0.5) is then multiplied by the PN samples and the results are accumulated. This product is then added to the previous correlation result stored in the respective storage element 23.

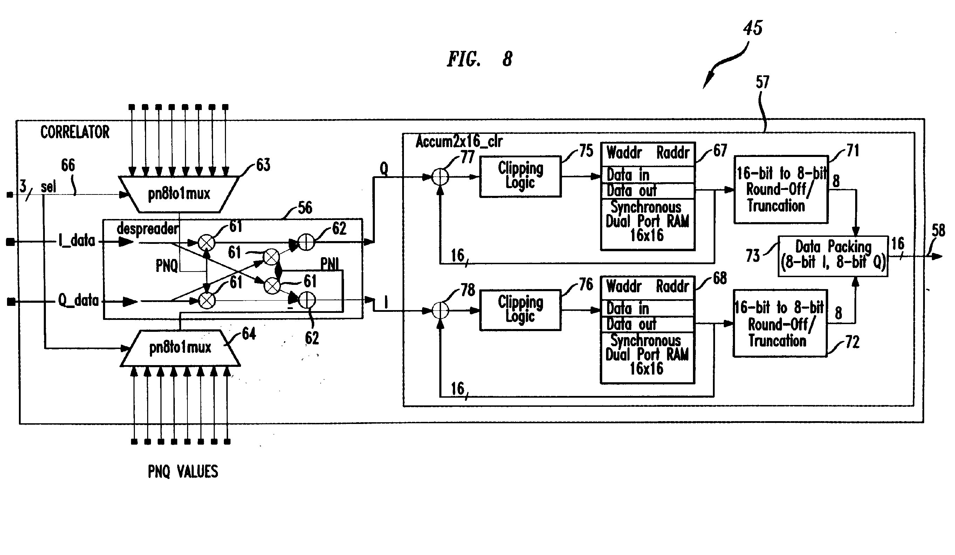

Once MxW samples of $\underline{r}$(i) have been received and processed in this manner, the correlation results accumulated in the storage elements 23 are mature, or final. These final correlation results are then processed by the DSP (not shown) to determine which correlation result corresponds to the best match. The number of shifts of the PN sequence that correspond to the best match is then determined to be the time delay of the signal r(i). The manner in which the correlator 20 of the present invention performs these operations to produce the correlation results are discussed below in detail with reference to Fig. 8.

The correlator 20 of the present invention preferably is implemented in one or more Field Programmable Gate Arrays (FPGAs). The FPGA is a processor containing hardware that performs the correlation processes, including the aforementioned shifting, multiplication and accumulation functions. However, the present invention is not limited with respect to the processor that is utilized for performing the correlation functions. An Application Specific Integrated Circuit (ASIC) may also be used for this purpose. A microprocessor programmed with appropriate software may also be used for this purpose.

In order for real-time operation to be achieved, the correlator 20 should be capable of performing 2(W) imaginary multiplications and 2(W) imaginary additions per input sample period *(i.e.,* per chip). In other words, 2(W) imaginary multiplications and 2(W) imaginary additions must occur during the time period after the current sample of the signal r(i) is received by the correlator 20 and before the next sample of the signal r(i) is received by the correlator 20.

By reducing the amount of hardware in the FPGA that is dedicated to perform the multiplication and accumulation functions, these resources can be used for other processing tasks. Also, by decreasing the processing overhead of the correlator 20, the throughput of the correlator 20 can be increased, thereby enhancing overall system performance. The correlator 20 of the present invention is time-efficient because, unlike the FIR filter approach of Fig. 2, the correlator 20 is not idle for any period of time during the correlation process. For example, if the coherent integration length M is 1000 and the search window W is 100, the speed at which the correlator 20 must operate in order to provide real-time operations is 10 % of that required for the FIR filter technique of Fig. 2. This reduction in the required processing speed is achieved by uniformly distributing the calculation load over time.

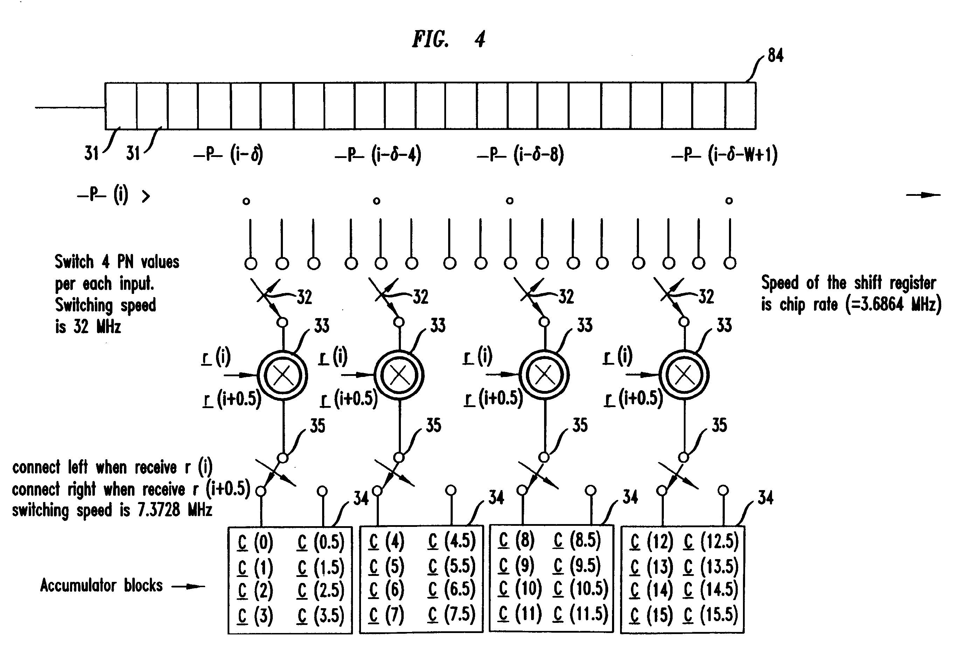

Although Fig. 3 shows separate pairs of multipliers and accumulators being used for producing each correlation result C(k), this is not required. The correlator 20 may utilize separate processors within the FPGA to perform these operations, or a single processor of the FPGA that performs multiple operations and produces multiple correlation results C(k). When the speed of the processor is faster than the minimum required speed, multiple tasks can be assigned to each processor. For example, assuming the clock speed of the processor is 64 MHz and the imaginary multiplication and accumulation operations require two cycles, then the calculation speed of one cycle of the operations is 32 MHz. Assuming the input rate is 7.3728 MHz *(i.e.,* the rate at which the samples of r(i) are input into the correlator), four cycles of the operations can be assigned to a single processor. This is functionally illustrated by Fig. 4.

Complex PN sequences are stored in a shift register 30. The size of the shift register 30 depends on the maximum allowable round trip delay. A variable δ shown in Fig. 4 corresponds to the estimated minimum round trip delay of the signal r. For example, if the cell radius is 15 kilometers (Km), then the maximum round trip distance is 30 Km. In this example, this maximum round trip delay corresponds to approximately 380 chips. Therefore, the minimum number of shift register storage elements needed for storing the imaginary PN sequence is 760. The number of processors depends on the search window size. For the processor speed and input rate utilized in this example, the number of processors needed is W/4.

Fig. 4 illustrates four columns of multiplication and accumulation units. Each of these columns corresponds to a separate processor. As stated above, in this example, each processor is capable of performing 4 cycles of the multiplication and accumulation operations. For this example, the speed of the shift register 30 is assumed to be 3.6864 MHz, which corresponds to the chip rate. The received signal r(i) is assumed to be at half-chip resolution. Therefore, the speed of the received signal is 7.3728 MHz. Switches 32 connect the storage elements 31 of the shift register 30 to the processors that perform the multiplication and accumulation operations. The multiplication operations are represented by the "X"s in the concentric circles 33 and the accumulations are represented by the accumulator blocks 34. The switching speed of the switches 32 must be at least four times the speed of the received signal r(i) in order to enable four PN values to be multiplied by the received signals r(i) and r(i+0.5). Since the speed of the received signal is 7.3738 MHz, a switching speed of 32 MHz is adequate.

Therefore, in each processor, four PN values are multiplied by r(i) and then the same four PN values are multiplied by r(i). The correlation results are accumulated in the accumulation blocks 34 and a total of 32 imaginary correlation results C(0) through C(15) are obtained. The switching speed of the switches 35 is equal to the speed of the input signal, which is 7.3728 MHz in this example. Therefore, each processor generates multiple correlation results during each sample period by correlating multiple PN samples with the current sample of the received signal r(i).

Having described the concept of the correlator, reference is now made to the temporal shifting (delay) of the PN sequence with respect to the input data. Under certain hardware resource constraints, suppose only half of the required correlators can be implemented. This constraint effectively reduces the cell radius by half. Following are three solutions which are directed toward doubling the cell radius. They each have different implementation schemes, but each is based on the same principle, that of temporal shifting (delaying) the PN sequence with respect to the input data by Ts where the delay Ts is equal to the number of correlators multiplied by the processing power of the correlators.

For example, if the number of correlators in the system is 2, and each correlator has the processing power of 8, then the temporal shift, the Ts, should be 16 chips or, stated in another way, 16 PN values.

The preferred solution for doubling the cell radius to a desired distance is effected by using a memory buffer to cause a temporal shift between the PN sequence and the received data. The memory buffer can be realized by a RAM, by shift registers or by a dual-port RAM. The size of the memory buffer should be equal to the size of PN I and PN Q generated during the Ts time interval. For example, if a PN shift register is 128 x 1 in length, and there are two PN shift registers for the PN I and PN Q values, then the size of the memory buffer required will be 128 x 2.

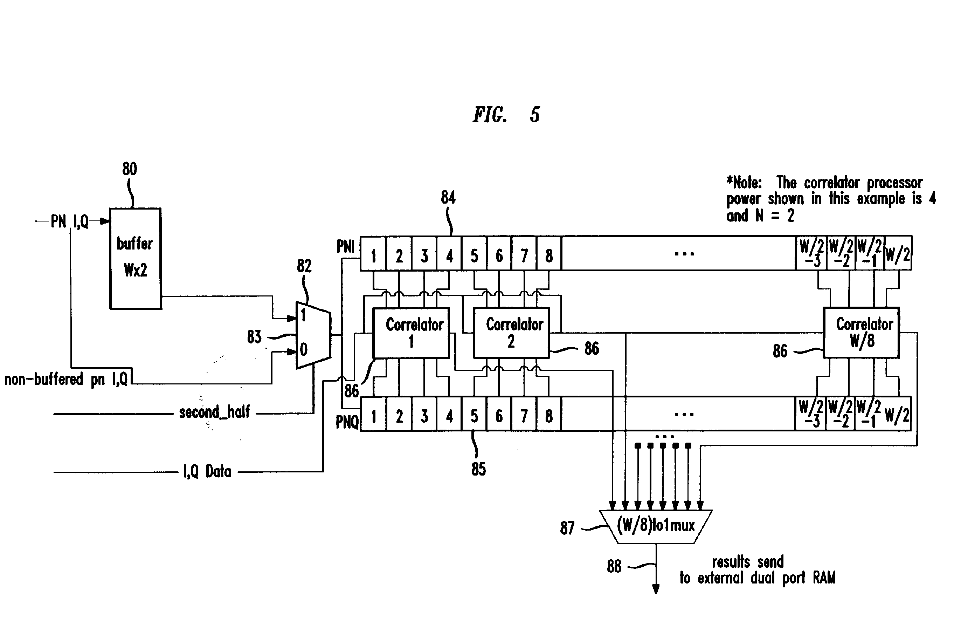

Referring to Fig. 5, there is illustrated structure in accordance with the principles of this invention where the window size is W, N is 2 and the correlator processor power, Cpp is 4. Where there are N segments, each segment is W/N in length and the search window has a length of W. The PN I and PN Q input signal is fed to a memory buffer 80 and to the low (0) input terminal of a multiplexer 82. The output terminal of the buffer 80 is coupled to the high (1) input terminal of the multiplexer 82. Thus, the high (1) input terminal of the multiplexer 82 is coupled to receive buffered (delayed) PN I and PN Q signals and the low (0) input terminal of the multiplexer is coupled to receive non-buffered (not delayed) PN I and PN Q signals. Second_half select signal is fed to an enable terminal 83 of the multiplexer. The output of the multiplexer 82 is coupled to shift registers 84 and 85 where shift register 84 stores the real part of the PN sequence and shift register 85 stores the imaginary part of the PN sequence. Correlators 86, coupled to the shift registers 84, 85, generate a final correlation result which is fed to a multiplexer 87. A control signal (not illustrated) enables the multiplexer to cause the selected correlation result to be fed to output terminal 88. Briefly, when the select signal at terminal 83 of the multiplexer 82 is "0" or low, the non-buffered (not delayed) PN I, PNO signal is read out. When the select signal is "1" or high, the buffered (delayed) PN I, PN Q signals are read out. In operation, upon initialization, the PN shift registers 84, 85 are filled with the non-buffered PN values. On the start search command, the real-time data is correlated to the PN values stored in the PN shift register and are accumulated for the specific integration length. Upon the completion of the accumulation, the results of the first half of the search window are sent to another storage device to make room for the results of the second half of the search window. The select signal, second-half, when high, enables the buffered PN I, Q path to pass through the PN input multiplexer. At this time, the PN shift registers will be filled with the buffered PN values from the buffer and, at the next Power Control Group (PCG) boundary, the parallel correlators begin to correlate the real-time data with the delayed version of the PN values for the same integration length. The correlation of the real-time data first with the non-buffered PN values, and then with the buffered PN values effectively doubles the search window, thus doubling the cell radius.

In Fig. 5, the memory buffer is a circular memory buffer. It is to be understood that the invention is not limited to a circular memory buffer and that a single PN generator or multiple PN generators can be used. A circular memory buffer has the following advantages: (1) simple control logic; (2) no impact on the initialization process; and (3) the interface with other modules remains the same. A single PN generator with multiple masking values has the advantage that the need for using a memory buffer is eliminated. Multiple PN generators have the advantages of (1) eliminating the need for using a memory buffer; and (2) having less complicated control logic.

In the embodiment here disclosed, the circular memory buffer is initially selected because it requires the least modification to the original system architecture and is the simplest to implement. Figs. 5, 7, and 8 illustrate the implementation of one embodiment of the invention using a circular memory buffer for the searcher in Code Division Multiple Access (CDMA) 2000 base stations where W=256, N=2, and the correlator processor power, Cpp=8.

The circular memory buffer can take the form of shift registers, a dual-port RAM or a RAM. Shift registers have the following advantages: (1) the control logic is simple to implement; and (2) there is no need for read-address and write-address. A dual-port RAM has the following advantages: (1) the control logic is simple; (2) all timing information is isolated from the original design leads to permit incorporation into the original design; and (3) it requires just a little more hardware resource. The single-port RAM has the advantage that it requires the least hardware resource.

Referring to Fig. 5, the dual-port RAM of the size 128 x 2 was chosen as the circular buffer for the PN values. At startup, the dual-port RAM is initialized to zero. New PN I and PN Q signals regenerated and written to the dual-port RAM circular buffer at the chip rate. The read-address (raddr) is always leading the write-address (waddr) by one and, after each write, both are increased by one. The PN values are read from the circular buffer at the chip rate and are delayed by 128 chips.

During the correlation of the input data to the first half of the search window, the multiplex select signal "second-half" (see Fig. 5) is low and the non-buffered PN values are fed to the PN shift registers. After the completion of the correlation in the first half of the search window, the results that were stored in the distributed dual-port RAMs in the accumulators are sent to a larger dual-port RAM to prepare the accumulators for the correlation of the second half of the search window. During the second half operation, the "second-half" signal is high and the buffered PN values are fed to the PN shift registers. Upon the completion of the second half of the search window, the results are sent to the larger dual-port RAM to form a complete set of results of the correlation. The correlating computations of both halves should be started at the Power Control Group (PCG) boundary to avoid inaccurate results if the accumulated data does cross the power control group boundaries.

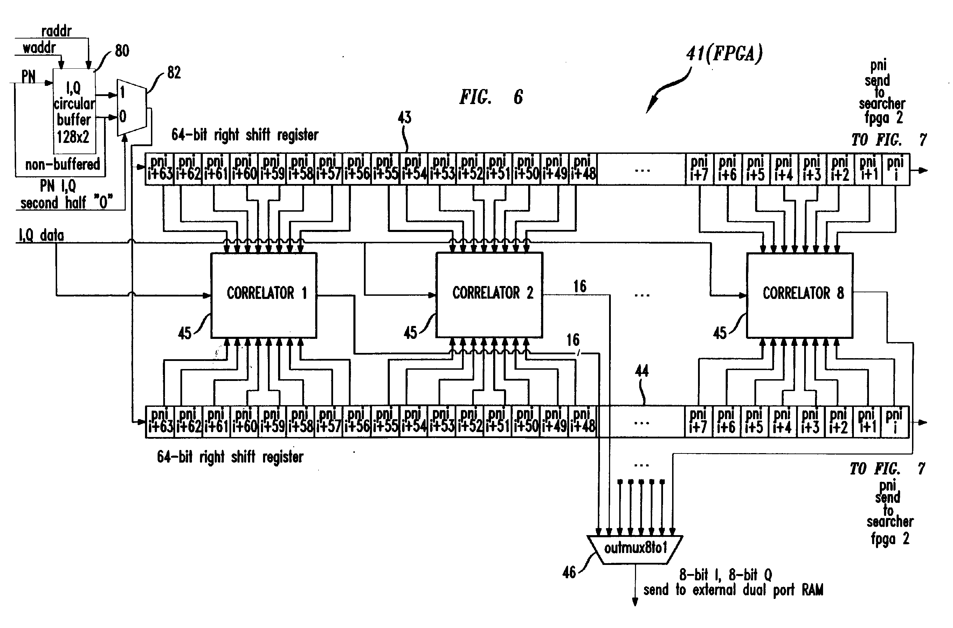

Referring to Figs. 6-8, the correlator of the present invention preferably is implemented by using long shift registers as storage devices for the PN values and by using synchronous dual-port random access memory (RAM) devices as the memory storage devices for the accumulator blocks 34 shown in Fig. 4. It should be noted that the correlator of the present invention actually comprises several correlator devices. These correlator devices produce the correlation results that are processed to determine the timing delay of the received signal. In accordance with the preferred embodiment, the correlator of the present invention comprises 16 correlator devices.

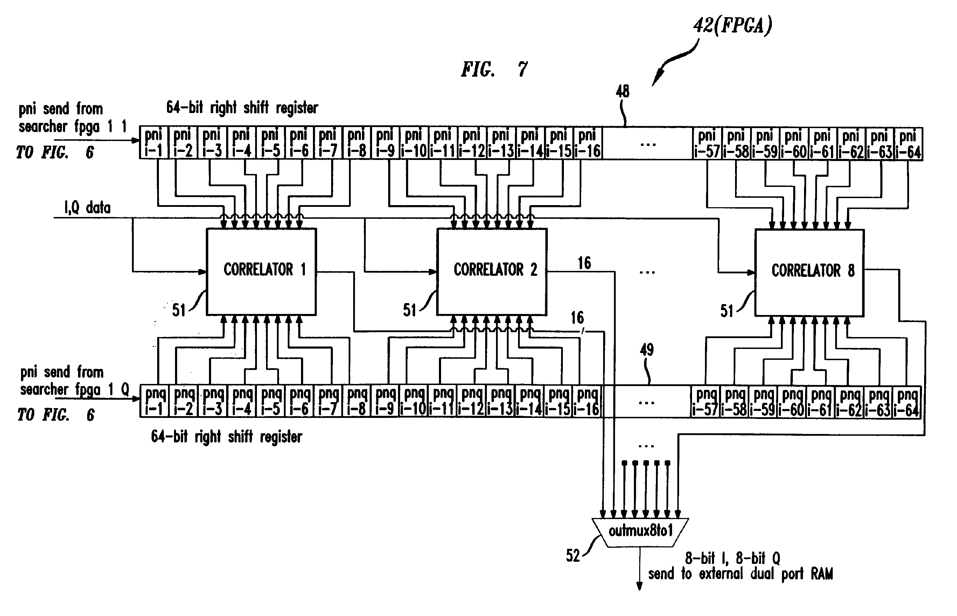

Figs. 6 and 7 are block diagrams that together illustrate the correlator of the present invention in accordance with the preferred embodiment. The correlator shown in Figs. 6 and 7 is implemented using first and second FPGAs 41 and 42. FPGA 41 comprises two 64-bit shift registers 43 and 44, which store the imaginary and real PN sequences, respectively. The input terminals of the shift registers 43, 44 are coupled to receive buffered and non-buffered PN I and Q signals. Referring to Fig. 6, circular buffer 80 is coupled to receive PN I and Q signals, read address (raddr) signals and write address (waddr) signals. Buffered (delayed) PN I and Q signals from the circular buffer 80 are fed to an input terminal of multiplexer 82. Non-buffered (not delayed) PN I and Q signals are fed to another input terminal of multiplexer 82. A second half signal is fed to an enable terminal fo the multiplexer 82. When the enable signal is low (0), the multiplexer is primed to pass the non-buffered PN I, Q signal to the shift registers 43, 44 and, when the enable signal is high (1), the multiplexer is primed to pass the buffered PN I and Q signal to the shift registers 43, 44. FPGA 41 also comprises eight correlator devices 45. Each correlator device 45 produces a final 16-bit correlation result, which is delivered to a multiplexer 46. A control signal (not shown) is utilized to enable the multiplexer 46 to cause it to output the selected correlation result. The logic of the second FPGA 42 (Fig. 7) is identical to the logic of FPGA 41. The FPGA 42 comprises two 64-bit shift registers 48 and 49 for storing the imaginary and real PN sequences, respectively. FPGA 42 comprises eight correlator devices 51. Each correlator device 51 produces a final 16-bit correlation result, which is delivered to a multiplexer 52. A control signal (not shown) is utilized to enable the multiplexer 52 to cause it to output the selected correlation result.

The correlation search window W for this embodiment is 128 chips, which corresponds to the combined lengths of the shift registers 43 and 48. Each correlator device receives the current input signal $\underline{r}(i)$ and $\underline{r}(i+0.5)$, which are represented by I,Q data in Figs. 6 and 7. Each correlator device 45, 51 then correlates the received signal with a PN sequence stored in one of the shift registers 43, 44, 48 and 49. In essence, each correlator device 45, 51 performs the correlation process with a PN sequence that corresponds to a different instant in time. After a predetermined number of correlations have been performed, each correlator device 45, 51 outputs the 16-bit final correlation result.

The manner in which the correlation process is performed by each correlator device 45, 51 will now be described with reference to Fig. 8. Fig.8 is a block diagram of one of the correlator devices 45 shown in Fig. 6. As shown in Fig. 8, each correlator device 45 preferably comprises a despreader 56 that performs the multiplication and addition operations of a complex number having real and imaginary parts. The results of the imaginary multiplication and addition operations are output to an accumulator logic component 57, which accumulates the correlation results over a predetermined period of time and produces a final correlation result 58. The received signal $\underline{r}(i)$, which is represented by I_data and Q_data, is received by the despreader 56. The despreader 56 comprises multipliers 61 and adders 62 that perform the imaginary multiplication and addition operations. The despreader 56 is connected to first and second multiplexers 63 and 64. The multiplexers 63 and 64 receive 8 imaginary and eight real PN sequences, respectively, from the shift registers 43 and 44, respectively. A selector signal 66 controls the timing at which the PN values are delivered to the despreader 56.

The accumulator logic 57 component comprises two 16x16 synchronous dual-port RAM devices 67, 68. The dual-port RAM devices 67, 68 accumulate the correlation results. Two truncation components 71, 72 truncate the data output from the dual-port RAM devices 67, 68 into 8-bit values. Although the higher-bit resolution is desired during the correlation process, only 8 bits are needed for the I and Q final correlation result values. This enables the final correlation result to be more quickly sent to other logic for subsequent processing (e.g., the aforementioned DSP) than if two 16-bit I and Q values had to be packed and sent. The components 67, 71, 75 and 77 of the accumulator logic component 57 operate on the imaginary component Q of the correlation result and components 68, 72, 76 and 78 operate on the real component I of the correlation result. A data packing component 73 combines the real and imaginary final correlation values into a 16-bit final correlation value. The final correlation result 58 is output from the accumulator logic once it is mature, *i.e.*, after a predetermined number of correlation operations have been performed.

The accumulator logic component 57 also comprises two clipping logic components 75 and 76 and two adders 77 and 78. The adders 77 and 78 add the correlation results output from the despreader 56 with correlation results read out of the dual-port RAM devices 67, 68. The clipping logic components 75 and 76 prevent the value received from the adders 77 and 78 from rolling over to a value that results in all zeros. For example, if the value read out of the dual-port RAM device 67 was all ones, and if the value of Q was also a one, the sum would produce all zeros. In this case, the clipping logic component 75 would maintain the value as all ones. The outputs of the clipping logic components 75, 76 are written into the dual-port RAM devices 67, 68.

In accordance with the preferred embodiment of the present invention, 1 chip corresponds to 16 clock cycles of the correlator device 45. Since the received signals I_data and Q_data are at half-chip resolution, each of those signals are operated on by the despreader 56 for 8 clock cycles. The PN values received by the multiplexers 63, 64 are at whole-chip resolution. Therefore, the values presented to the multiplexers 63, 64 do not change for 16 clock cycles. After 16 clock cycles, the shift registers 43, 44 shift by one chip, which changes the PN values presented to the multiplexers 63, 64. The selector signal 66 selects a different PN value each clock cycle. Therefore, each received signal $\underline{r}(i)$ and $\underline{r}(i+0.5)$ is correlated with 8 PN values. Also, the same 8 PN values are correlated with $\underline{r}(i)$ and with $\underline{r}(i+0.5)$, because the set of PN values does not change for an entire chip.

During each clock cycle, I and Q values are presented by the despreader 56 to the accumulator logic component 57. Since a dual-port RAM device is used for storing the correlation results, a correlation result value can be written into memory during a clock cycle and a correlation value can be read out of memory during the same clock cycle. Therefore, the correlation results that are read out of the dual-port memory devices 67, 68 can be made available to the adders 77, 78 before the next correlation results have been output from the despreader 56. This allows the correlation results to be generated and accumulated in a pipe-lined fashion, thereby allowing the number of hardware components that are needed for implementation of the correlator device 45 to be minimized. In other words, by pipelining operations, 16 PN values can be correlated with the received signal during a chip period without having to utilize 16 different despreaders. Similarly, only 2 clipping logic components 75, 76, rather than 16, are needed for performing the clipping operations. In addition, the correlator devices cover the entire search window, which also eliminates the need to provide memory for storing the input data.

It should be noted that the correlator of the present invention may be implemented solely in hardware or in a combination of hardware and software. The present invention is not limited with respect to the manner in which these functions are implemented. Also, the present invention is not limited to any particular types of storage elements for storing the PN sequences and the correlation results. Those skilled in the art will understand that the shifting, multiplication, addition and storage operations performed by the correlator of the present invention may be performed solely in hardware or in a combination of hardware and software, such as a computer program being executed by a microprocessor. In the latter case, the software would be stored in a computer-readable medium that is accessible by the microprocessor. The computer-readable medium could be inside of or external to the microprocessor. Computer-readable mediums that are external to the microprocessor could include, for example, a solid state memory device, a magnetic storage medium or an optical storage medium.

The prior description and explanation relates to the specific problem of being able to implement only one half of the correlators. It is here noted that this invention is not limited to solving that problem, but can also be used to solve the problem when only a fraction of 1/N of the total correlators is available, where N is equal to 2, 3, 4 ... W. Clearly, there is a limit on how large N can be and that is dependent on other system parameters.

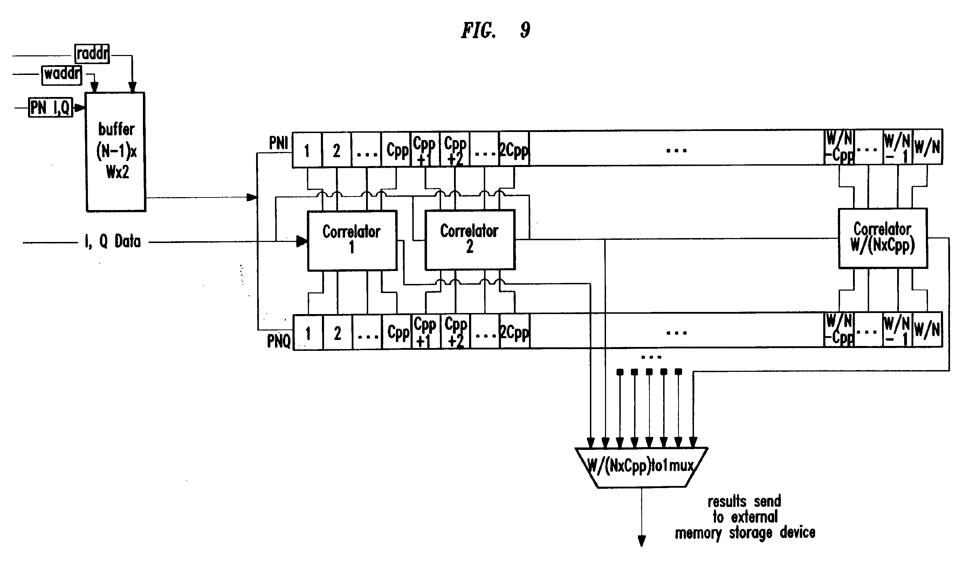

In a more general case, the cell radius is reduced to 1/N. The size of the PN buffer can be increased to N-1 times the size of the PN shift registers to allow for the larger shifting of the search window to cover the entire round trip delay distance. Referring to Fig. 9, there is illustrated the larger dual-port RAM that is to be used when the number of correlators that are being used is only 1/N of the required numbers of correlators. Other than the size of the PN shift registers, the most noticeable difference between the embodiment of Fig. 9 and that of Figs. 6 and 7 is the absence of the multiplexer, between the circular buffer and the input to the shift registers. The operation of the embodiment of Fig. 9 follows:

1. Load the shift registers with the non-delayed value;
2. Fill the PN circular buffer with the PN values at the chip rate. This step should be performed in the background.
3. Wait for the power control group boundary;
4. Start accumulating for a specified number of times;
5. Increase both the waddr and raddr addresses by one after each write command;
6. Transfer the results from the accumulators to another storage device;
7. If the last segment of the PN window has been computed, go to step 10, otherwise continue with the next step.
8. Prepare for the calculations of the next segment as follows:

   a) Clear all accumulators;
   b) Load the raddr (read address) with the proper address to access the correct delay PN values from the dual-port RAM PN buffer;
   c) Fill the PN shift registers with the PN values read out by the raddr address.

9. Return to step 3.
10. Tell the searcher that all correlator results are ready, set all parameters back to the initial state, fill the PN shift registers with the non-delayed PN values and wait for the next search command. Upon receiving the next search command, return to step 3.

It should be noted that the present invention has been described with reference to particular embodiments, but that the present invention is not limited to these embodiments. Those skilled in the art will understand that modifications may be made to the embodiments discussed herein that are within the scope of the present invention. For example, although the present invention has been described with respect to particular chip rates, clock cycles per chip and processor speeds, these are merely intended to be examples and are used only to describe the concepts of the present invention and the preferred embodiments. Those skilled in the art will understand that the present invention is not limited with respect to these timing parameters.

**Claims**

1. Apparatus for correlating a received signal with a pseudo-random number (PN) code sequence to determine a timing delay of the received signal, **characterized by**:

   a first shift register, having a plurality of storage elements, each storage element being configured to store a real sample of the PN code sequence, each real sample of the PN code sequence being comprised of more than one bit;
   a second shift register, having a plurality of storage elements, each storage element of the second shift register being configured to store a imaginary sample of the PN code sequence, each imaginary sample of the PN code sequence being comprised of more than one bit;
   a memory buffer coupled to feed real and imaginary buffered and non-buffered samples of the PN code sequence to the first and second shift registers; and
   a plurality of correlator devices, each correlator device being configured to correlate a sample of the received signal with certain samples of the PN code sequence stored in the first and second shift registers to produce a correlation result.

2. The apparatus of claim 1, **characterized in that** each shift register comprises W/N storage elements, where W/N is a correlation search window that is covered by the plurality of correlators implemented in the design.

3. The apparatus of claim 1, **characterized in that** each correlator device correlates multiple real and imaginary PN code samples with the sample of the received signal during a sample period, the shift registers are coupled to receive shift signal at a rate of one chip per sample period, and the sample of the received signal is received by the correlator at a rate of one-half chip per sample period.

4. The apparatus of claim 1, **characterized in that** each correlator device is coupled to at least one dual-port memory device for accumulating the correlation results.

5. The apparatus of claim 1, **characterized in that** each correlator device produces real and imaginary correlation results and is coupled to a first dual-port memory device for accumulating the real correlation results and a second dual-port memory device for accumulating the imaginary correlation results.

6. The apparatus of claim 1, **characterized in that** each correlator device comprises a despreader for receiving the sample of the received signal and the real and imaginary PN code samples to perform complex multiplication and addition using the sample of the received signal and real and imaginary PN code samples to produce a non-final real and imaginary correlation result.

7. The apparatus of claim 6, **characterized in that** each correlator device further comprises first and second multiplexers, the first multiplexer being in communication with the first shift register and with the despreader, the second multiplexer being in communication with the second shift register and with the despreader, each multiplexer being coupled to receive a plurality of PN code samples output from respective shift registers and to receive a select signal which causes each multiplexer to output a particular one of the PN code samples provided thereto to the despreader to be used in the complex multiplication and addition operations.

8. The apparatus of claim 7, **characterized in that** each correlator device further comprises:

   a first adder coupled to receive the non-final real correlation result produced by the despreader;
   a second adder coupled to receive the non-final real correlation result produced by the despreader;
   a first dual-port memory device, coupled to feed, during a clock cycle, a non-final real correlation result that was previously stored in the first dual-port memory device to the first adder to be summed with the non-final real correlation result produced by the despreader, the sum generated by the first adder being stored in the first dual-port memory device; and

a second dual-port memory device, coupled to feed, during the clock cycle, a non-final imaginary correlation result previously stored in the second dual-port memory device to the second adder to be summed with the non-final imaginary correlation result produced by the despreader, the sum generated by the second adder being stored in the second dual-port memory device.

9. The apparatus of claim 8 comprises 16 correlator devices, the first and second shift registers each have 128 storage elements, each correlator device being coupled to receive eight real and eight imaginary PN samples from the first and second shift registers, respectively, the eight real and eight imaginary PN samples being provided to the first and second multiplexers, respectively, of each correlator device.

10. The apparatus of claim 9, **characterized in that** each correlator device further comprises first and second clipping logic components, the first clipping logic component being interposed between the first adder and the first dual-port memory device, the second clipping logic component being interposed between the second adder and the second clipping logic component, the first and second clipping logic components adapted to perform clipping operations on the sums generated by the first and second adders, respectively, before storing the sums in the respective dual-port memory devices.

11. The apparatus of claim 10, **characterized in that** the first and second dual-port memory devices are synchronous dual-port random access memory (RAM) devices.

12. The apparatus of claim 10, **characterized in that** each correlator device further comprises round-off/truncation logic for rounding off and truncating the correlation results read out of the first and second dual-port memory devices into 8-bit correlation results.

13. The apparatus of claim 12, **characterized in that** each correlator device further comprises data packing logic that combines the 8-bit correlation results produced by the round-off/truncation logic into a 16-bit correlation result.

14. The apparatus of claim 1, **characterized in that** the memory buffer comprises a random access memory.

15. The apparatus of claim 1, **characterized in that** the memory buffer comprises a shift register.

16. The apparatus of claim 1, **characterized in that** the memory buffer comprises a dual-port random access memory.

17. A method for correlating a signal received by a correlator with a pseudo-random number (PN) code sequence having real PN I and imaginary PN Q components to determine a timing delay of the received signal, the method **characterized by** the steps of:

storing non-buffered samples of the PN I code sequence in a first shift register;
storing non-buffered samples of the PN Q code sequence in a second shift register;
correlating and accumulating the PN I and Q code sequence in the first and second shift registers with the received signal to obtain a result;
transferring the result to a result storage element when accumulation is completed;
storing a first buffered segment sample of the PN I code sequence in the first shift register;
storing a first buffered segment sample of the PN Q code sequence in the second shift register;
correlating and accumulating the PN I and Q code sequence in the first and second shift register with the received signal to obtain a result; and
transferring the result to the result storage element when accumulation is completed.

18. The method of claim 17 further **characterized by** the steps of:
loading the first and second shift registers with a next accessing segment of the buffered PN I, Q sequence and correlating and accumulating the buffered PNI, Q code sequence with the received signal to obtain a result and transferring the results to the other storage element until all segments of the search window have been processed and the results are in the result storage element.

FIG. 1

(PRIOR ART)

EP 1 152 544 A1

*FIG. 2*
*(PRIOR ART)*

C (0) C (1) C (2) ••• C (W)

FIG. 3

FIG. 4

Speed of the shift register is chip rate (=3.6864 MHz)

84

$-\underline{P}-(i)>$

$-\underline{P}-(i-\delta)$   $-\underline{P}-(i-\delta-4)$   $-\underline{P}-(i-\delta-8)$   $-\underline{P}-(i-\delta-W+1)$

31  31  31

Switch 4 PN values per each input. Switching speed is 32 MHz

32  33  32  33  32  33  32  33

$\underline{r}(i)$   $\underline{r}(i+0.5)$

35  35  35  35

34  34  34  34

connect left when receive r (i) connect right when receive r (i+0.5) switching speed is 7.3728 MHz

| $\underline{c}(0)$ | $\underline{c}(0.5)$ | $\underline{c}(4)$ | $\underline{c}(4.5)$ | $\underline{c}(8)$ | $\underline{c}(8.5)$ | $\underline{c}(12)$ | $\underline{c}(12.5)$ |
| $\underline{c}(1)$ | $\underline{c}(1.5)$ | $\underline{c}(5)$ | $\underline{c}(5.5)$ | $\underline{c}(9)$ | $\underline{c}(9.5)$ | $\underline{c}(13)$ | $\underline{c}(13.5)$ |
| $\underline{c}(2)$ | $\underline{c}(2.5)$ | $\underline{c}(6)$ | $\underline{c}(6.5)$ | $\underline{c}(10)$ | $\underline{c}(10.5)$ | $\underline{c}(14)$ | $\underline{c}(14.5)$ |
| $\underline{c}(3)$ | $\underline{c}(3.5)$ | $\underline{c}(7)$ | $\underline{c}(7.5)$ | $\underline{c}(11)$ | $\underline{c}(11.5)$ | $\underline{c}(15)$ | $\underline{c}(15.5)$ |

Accumulator blocks →

FIG. 5

*Note: The correlator processor power shown in this example is 4 and N = 2

EP 1 152 544 A1

FIG. 6

41(FPGA)

*FIG. 6*

64-bit right shift register

| pni i+63 | pni i+62 | pni i+61 | pni i+60 | pni i+59 | pni i+58 | pni i+57 | pni i+56 | pni i+55 | pni i+54 | pni i+53 | pni i+52 | pni i+51 | pni i+50 | pni i+49 | pni i+48 | ... | pni i+7 | pni i+6 | pni i+5 | pni i+4 | pni i+3 | pni i+2 | pni i+1 | pni i |

raddr
waddr

PN

I,Q circular buffer 128x2

non-buffered

PN I,Q second half "0"

I,Q data

CORRELATOR 1

CORRELATOR 2

CORRELATOR 8

16

16

64-bit right shift register

| pni i+63 | pni i+62 | pni i+61 | pni i+60 | pni i+59 | pni i+58 | pni i+57 | pni i+56 | pni i+55 | pni i+54 | pni i+53 | pni i+52 | pni i+51 | pni i+50 | pni i+49 | pni i+48 | ... | pni i+7 | pni i+6 | pni i+5 | pni i+4 | pni i+3 | pni i+2 | pni i+1 | pni i |

outmux8to1

8-bit I, 8-bit Q
send to external dual port RAM

pni
send
to
searcher
fpga 2

TO FIG. 7

pni
send
to
searcher
fpga 2

TO FIG. 7

FIG. 7

42(FPGA)

FIG. 8

CORRELATOR

**45**

**57**

Accum2x16_clr

16-bit to 8-bit Round-Off / Truncation — **71**

Data Packing (8-bit I, 8-bit Q) — **73**

16-bit to 8-bit Round-Off / Truncation — **72**

16

8

8

58

16

**67**
Waddr  Raddr
Data in
Data out
Synchronous Dual Port RAM 16x16

**68**
Waddr  Raddr
Data in
Data out
Synchronous Dual Port RAM 16x16

Clipping Logic — **75**

Clipping Logic — **76**

**77**

**78**

16

16

Q

I

**56**

**62**

PNI

**62**

**61**

**61**

**61**

PNQ

**61**

**61**

**63**
pn8to1mux

despreader

**64**
pn8to1mux

I_data

Q_data

**66**

3  sel

PNQ VALUES

*FIG. 9*

EP 1 152 544 A1

**European Patent Office**

## EUROPEAN SEARCH REPORT

Application Number

EP 00 31 0288

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 97 40398 A (SIRF TECHNOLOGY INC) 30 October 1997 (1997-10-30) | 1,2,17 | H04B1/707 |
| A | * page 29, line 38 – page 36, line 20; claims 1-4,6-10,24; figures 3,4 * | 3-16,18 | |
| Y | US 4 660 164 A (LEIBOWITZ LAWRENCE M) 21 April 1987 (1987-04-21) * column 2, line 54 – column 3, line 4 * * column 5, line 66 – column 7, line 45; claim 4; figures 2,4 * | 1,2,17 | |
| A | US 5 511 015 A (FLOCKENCIER STUART W) 23 April 1996 (1996-04-23) * abstract * * column 3, line 36 – column 4, line 59; figures 8,10,12,13 * | 1,17 | |

|  |  |
|---|---|
|  | TECHNICAL FIELDS SEARCHED (Int.Cl.7) |
|  | H04B |

The present search report has been drawn up for all claims

| Place of search | Date of completion of the search | Examiner |
|---|---|---|
| THE HAGUE | 23 March 2001 | Nilsson, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 31 0288

This annex lists the patent family members relating to the patent documents cited in the above—mentioned European search report.
The members are as contained in the European Patent Office EDP file on
The European Patent Office is in no way liable for these particulars which are merely given for the purpose of information.

23-03-2001

| Patent document cited in search report | | Publication date | Patent family member(s) | | Publication date |
|---|---|---|---|---|---|
| WO 9740398 | A | 30-10-1997 | US | 5901171 A | 04-05-1999 |
| | | | US | 6041280 A | 21-03-2000 |
| | | | US | 5897605 A | 27-04-1999 |
| | | | AU | 729697 B | 08-02-2001 |
| | | | AU | 3116097 A | 12-11-1997 |
| | | | CA | 2252903 A | 30-10-1997 |
| | | | EP | 0895599 A | 10-02-1999 |
| | | | US | 6018704 A | 25-01-2000 |
| | | | US | 6125325 A | 26-09-2000 |
| | | | US | 6047017 A | 04-04-2000 |
| US 4660164 | A | 21-04-1987 | NONE | | |
| US 5511015 | A | 23-04-1996 | GB | 2284285 A,B | 31-05-1995 |

EPO FORM P0459

For more details about this annex : see Official Journal of the European Patent Office, No. 12/82